# EUROPEAN PATENT APPLICATION

(11) **EP 1 081 927 A1**
(43) Date of publication of application: **07.03.2001**
(21) Application number: 99440241.0
(22) Date of filing: 01.09.1999
(51) Int. Cl.: H04M 3/428

(54) **A method of notifying an incoming call attempt to a user whose telephone line is occupied by a connection to a data communication network.**

(71) Applicant: ALCATEL, 75008 Paris (FR)
(72) Inventor: Uebele, Roland, 73614 Schorndorf (DE); Stemper, Peter Joachim, 70839 Gerlingen (DE); Grünwoldt, Lutz, 71638 Ludwigsburg (DE)
(74) Representative: Rausch, Gabriele, Dr.

(57) **Abstract**

The invention relates to a method of notifying an incoming call attempt to a user whose telephone line is occupied by a connection established by the user to a data communication network. According to the invention, the method consists in communicating to the server connected to the data communication network an identifier of the user's telephone line in association with a network address assigned to the user in the data communication network as well as forwarding all incoming calls addressed to that user to the server. In particular the server sends a message indicating the occurrence of incoming call attempts to the user over the data communication network, and informs also the calling party by means of announcements.

## Description

The field of the invention is that of services provided to users who access data communication networks over a telephone network. These services are supported by features of the telephone network combined with features of the data communication network. More precisely, the invention relates inter alia to a method of notifying an incoming call attempt to a user whose telephone line is occupied by a connection to a data communication network.

In the description below, data communication network is used to designate for example networks like Internet, World Wide Web or Intranets.

A common method of accessing data communication networks consists in using an analog telephone line in connection with a modem and a PC. A well known problem is that a user with only one telephone line could not be called, while he is connected to a data communication network. The line is occupied and incoming telephone calls can not be established. Incoming telephone calls are rejected and the calling party receive a busy tone.

This is a substantial disadvantage since the behavior of a user connected to data communication network differs substantially from conventional telephony. While an average telephone call takes about 3 minutes, an Internet session extends frequently over a half an hour and up to several hours. During this time, the users connected to Internet are not reachable.

Another disadvantage, from the telephone network operator point of view, is many possible calls fail and additional call attempts that load the network, without generating fees. Since the access to an Internet Service Provider usually takes place at a local rate, unsuccessful call attempts likely to generate higher fees influence the income of the telephone network operator to a large extent negatively.

The applicant presented a service called "Browse & Talk", that enables a user to be notified of telephone calls during an Internet session with the help of an Intelligent Network (IN).

With the service Browse & Talk, one telephone line is enough to be connected to the Internet and to be, at the same time, informed about incoming telephone calls. If the telephone line is busy and an incoming call is pending, a computer in the IN detects whether the telephone line is occupied by an Internet connection or not. If the user is connected to Internet, Browse & Talk activates a predefined action to handle the incoming telephone call.

The predefined action can be selected among several possibilities by the user before or during the Internet session. Examples of predefined actions are:
- Display only a dialog box on the screen of the user's PC. The user decides on his own if he wants to close the Internet session and answer the call.
- Terminate the Internet session automatically. The telephone call is established.
- Forward the incoming telephone call to a mobile phone or to a mailbox.
- Reroute the call to the user's PC. The user telephones over Internet by means of Voice over IP without having to terminate the ongoing Internet session.

However, the use of IN to detect an Internet session implies that the service relies on a complex network architecture managed by the telephone network operator. This solution requires, on the one hand, an extended telephone network with IN capabilities able to detect an Internet session. On the other hand, the use of IN services generates extra charges to be paid by the Internet Service Provider offering the service Browse & Talk or by the user.

A particular object of the present invention is to provide a method of notifying an incoming call attempt to a user whose telephone line is occupied by a connection established by the user to a data communication network, without using the IN architecture or any other enhancement of a conventional telephone network.

Another object of the invention is also to notify to the calling party that the called party has been informed of the call attempt. Indeed, the calling party is, in usual systems, not informed, for what reason the called user is not reachable during a so long period.

Another object of the invention is to customize the notification to the user connected to a data communication network and the notification to the calling party.

These objects, and others that appear below, are achieved by a method according to claims 1 to 6, by a computer according to claims 7 and 8, by a computer program according to claim 9, by a server according to claims 10 to 12 and by a whole system according to claims 13 and 14.

Other characteristics and advantages of the invention will appear on reading the following description of a preferred implementation given by way of non-limiting illustration, and from the accompanying drawings, in which:
Figure 1 shows an existing system to connect to a data communication network over a telephone line;
Figure 2 shows an enhancement of the system described in Figure 1 comprising elements to realize an embodiment of the method according to the invention;
Figure 3 is a block diagram of an embodiment of a server according to the invention.

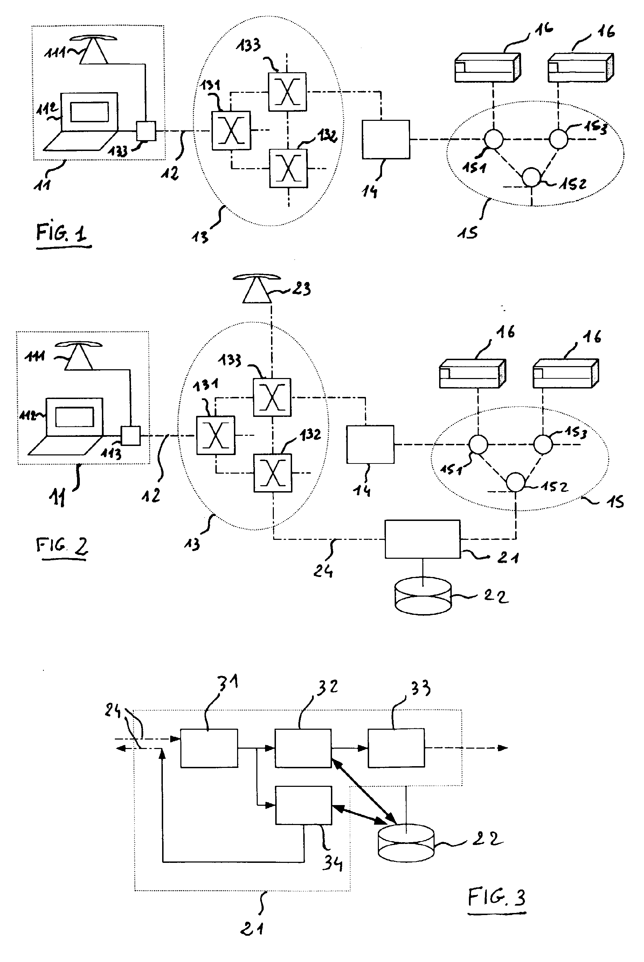

Figure 1 illustrates a system comprising a user 11 connected through an analog telephone line 12 to a telephone network 13 comprising several interconnected exchanges 131, 132, 133. The user 11 is provided with two terminals both connected to the analog telephone line 12 over a Terminal Adapter Equipment (TAE) 113. One terminal is an analog telephone 111, the other is a Personal Computer (PC) 112 comprising an analog modem.

The user 11, by means of the PC 112, accesses a data communication network 15 (Internet) by establishing a physical connection to a Internet Service Provider (ISP) 14 over the telephone network 13. The part of the connection between the user 11 and a exchange 131 is an analog line, the part of the connection between the exchange 131 and the ISP 14 is a digital line.

During the establishment of the connection, the ISP 14 assigns a network address to the PC 112 to be identified unequivocally in the data communication network 15. The network address is included in each data packet and used to route the data packet to the appropriate destination over several nodes 151, 152, 153 of the data communication network.

The connection over the telephone network 13 between the user 11 and the ISP 14 is used as physical medium to transfer data packets between the PC 112 and servers 16 connected to the data communication network 15. The data packets may be Internet Protocol (IP) packets. The physical connection over the telephone network 13 between the user 11 and the ISP 14 remains established during the whole duration of the connection of the PC 112 to the data communication network 15.

Figure 2 shows how the foregoing system has to be adapted to provide the user 11 with a service called "Call Notification If Internet Busy" (CNIIB) according to the invention. The CNIIB service notify an incoming call attempt to a user whose telephone line is occupied by a connection to a data communication network.

A server 21 connected over a digital line to an exchange 132 is included in the system showed in figure 1. The server 21 is also part of the data communication network 15, that means that it is assigned a network address in the data communication network 15 and can be addressed unequivocally data packets.

Before connecting to the data communication network 15, the user 11 enables call forwarding, so that all incoming calls are forwarded automatically to the server 21. Call forwarding may be activated from the telephone 111 by dialing an appropriate code and the telephone number associated to the server 21. Call forwarding may also be activated thanks to a client software stored on the PC 112 which makes the modem generate DTMF (Dual Tone Multi Frequency) tones simulating the dialing of call forwarding code and telephone number of the server 21.

The telephone number of the server 21 may be communicated to the user 11 after a registration procedure or contained in the client software stored on the PC 112.

Instead of being activated with DTMF tones before connecting to the data communication network, call forwarding may be activated during the connection to the communication data network. In that case, a message containing call forwarding parameters may be sent over the data communication network 15 to a Personal Telecom Manager PTM also connected to the telephone network 13. The PTM may be a server and is responsible for activating call forwarding in the exchange 131.

In this implementation of the invention, the server 21 can only handle a forwarded call at a time.

In a preferred embodiment of the invention, a repartitor is included in the system just before the server 21 in order to handle more than one call at a time. This repartitor enables it to have a unique telephone number to reach the server, while making several lines available between the repartitor and the server to handle at the same time several forwarded calls.

The client software on the PC 112 has to send user specific information to the server 21 over the data communication network 15. These information are stored in a database 22 that could be internal or external to the server 21.

The only mandatory user specific information is the relation between the telephone number of the user 11 and the network address assigned to the PC 112.
- This information may be sent automatically to the server 21 by the client software stored on the PC 112 for each connection to the data communication network 15, once the PC 112 has been assigned a network address by the ISP 14.
- This information may also be sent by the ISP 14.

In a preferred embodiment, the content of this user specific mandatory information may be checked thanks to an authentication procedure executed at the server 21. The authentication procedure checks, for example, if the user whose telephone number is contained in the information has subscribed to the CNIIB service. A message depending on the result of the authentication procedure could be sent by the server 21, through the data communication network, to the user 11. If the message indicates that the user is not authorized to use the service CNIIB, the client software handling this message at the PC 112 may automatically release the connection to the data communication network 15.

Optional configuration information may also be stored in the database 22. They remain stored in the database 22 until the user modify them, they need not to be sent to the server at each connection to the communication network 15. Possible optional information are:
- information customized by the user 11 may be stored in the database 22. These information are sent from the client software stored on the PC 112 over the data communication network 15 to the server 21 and stored in the database 22. The content of such information makes the server 21 adapt the message indicating the occurrence of an incoming call attempt to the wishes of the user 11.
   For example, instead of the raw telephone number of the calling party, the user 11 may want to be notified of the name of the calling party or of a text related to him or her. In this case, the name or the text in association with the raw telephone number are sent by the user 11 to the server 21 over the data communication network and stored in the database 22 under the database entry of the user 11.
   The user may also want personalized announcements to be played to predefined calling parties, a default announcement or a busy tone being played in the other cases. In that case, the personalized announcement is written in a message 11, sent to the server 21, converted in speech thanks to a text to speech program and stored in the database 22 under the database entry of the user 11;
- information provided by an operator of the server containing for example advertisement to be broadcasted to the users of the service CNIIB may also be stored in the database 22.

If a user 22 dials the telephone number of the user 11, while the latter is connected to the data communication network 15, the exchange 131 forwards automatically the call to the server 21 over the telephone network 13. The server 21 sends a message to the PC 112 over the data communication network 15, notifying the occurrence of the incoming call attempt. By receiving the message, the client software at the PC 112 displays a dialog box on the screen of the PC by formatting the information contained in the received message.

The client software may also initiate a Voice over IP (VolP) connection to answer the incoming call if the PC 112 is able to support this feature.

The client software also disables call forwarding automatically by means of DTMF tones after the connection to the data communication network 15 has been released. The telephone line 12 recovers then its default status.

The client software may be a program or a java applet stored on the server 21 and downloaded to the PC 1 12 over the data communication network 15, for example after subscription to the service CNIIB. The client program may also be stored on a floppy disk available to the user 11.

Figure 3 describe the structure of server 21 and the way it handles a forwarded call. The server 21 comprises means 31 for retrieving the telephone number of the calling party ( eg. the telephone number of user 22 showed on figure 2) as well as the telephone number of the called party (eg. the telephone number of user 11 showed on figure 2) from signalling information transmitted along with the forwarded call on the telephone line 24. The means 31 are connected to means 32 for constructing a message containing information stored in the database 22, under the database entry of the called party. Means 32 retrieve the network address associated to the called party's telephone number as well as customized information relating to the calling party or information provided by an operator of the server.

The means 32 are connected to sending means 33 able to send the message containing information about the incoming call attempt thanks to TCP/IP over the data communication network 15. The means 31 are also connected to means 34 for playing an announcement on the forwarded telephone call. The announcement may be a default one or a customized one stored in the database 22 if the calling party belongs to a predefined group of people also stored on the database 22.

The above described implementation of the invention relates to notify an incoming call attempt to a user connected to a telephone network over an analog telephone line. The method according to the invention may also be applied to a user connected to a data communication network over ISDN or to a user connected to a data communication network over a mobile communication network like GSM.

An ISDN basic access offers two digital channels. Usually, if the first channel is used for a connection to a data communication network, an incoming call can be directed to the second channel. However, if the two channels are already occupied, the present invention can also be applied.

## Claims

1. A method of notifying an incoming call attempt to a user whose telephone line is occupied by a connection established by said user from a computer to a data communication network, characterized by comprising the steps of:
- communicating to a server connected to said data communication network an identifier of said telephone line in association with a network address assigned to said computer in said data communication network;
- forwarding said incoming call to said server; and
- sending from said server to said computer over said data communication network a message indicating the occurrence of said incoming call attempt.

2. A method according to claim 1, characterized in that call forwarding to said server is activated by said computer before said computer is connected to said data communication network thanks to DTMF tones.

3. A method according to claim 1 or 2, characterized in that said data communication network is one of the Internet and the World Wide Web, and that said server is configured to communicate with a computer program stored on said computer.

4. A method according to claim 1, characterized by further comprising the step of playing an announcement stored on said server to the caller whose call attempt has been forwarded to said server.

5. A method according to claim 1, characterized in that said message comprises:
- call specific information retrieved by said server from said forwarded call;
- information customized by said user by a sending configuration message to said server over said data communication network; and
- information provided to said server by an operator of said server.

6. A method according to claim 1, characterized by further comprising the step of conducting at said server an authentication procedure while receiving said identifier of said telephone line.

7. A computer to be connected to a data communication network over a telephone line, characterized in that said computer comprises:
- means for activating the forwarding of incoming calls directed to said telephone line to a server; and
- means for displaying a message received from said data communication network indicating the occurrence of said incoming call.

8. A computer according to claim 7 , characterized in that said computer also comprises means for communicating an identifier of said telephone line in association with a network address assigned to said computer in said data communication network to a server over said data communication network.

9. A computer program to be run on a computer connectable to a data communication network over a telephone line, said computer program comprising computer program code means adapted to perform following steps:
- activate a call forwarding feature in a telephone exchange to forward incoming calls directed to said telephone line to a server;
- communicate an identifier of said telephone line in association with a network address assigned to said computer in said data communication network to said server over said data communication network; and
- display a message received from said data communication network indicating the occurrence of said incoming call.

10. A server to be connected to a telephone exchange and to a data communication network characterised in that it comprises:
- means for storing a telephone line identifier in association with a network address of a computer in said data communication network;
- means for receiving a call from said telephone exchange;
- means for retrieving said telephone line identifier contained in a received call;
- means for retrieving said network address of said computer associated with said telephone line identifier; and
- means for sending a message indicating the occurrence of said call to said computer over said data communication network.

11. A server according to claim 10, characterized in that said server also comprises:
- means for storing an announcement,
- means for playing said announcement to the caller whose call has been received by said server.

12. A server according to claim 10, characterized in that said server comprises means for storing a computer program according to claim 9 intended to be downloaded over said data communication network to a computer connected to a telephone line.

13. A system for notifying an incoming call attempt to a user whose telephone line is occupied by a connection established by said user from a computer to a data communication network, characterized in that said computer comprises means according to claims 7 and 8 and that said server comprises means according to claims 10 to 12.

14. A system according to claim 13, characterized in that said data communication network is one of the Internet and the World Wide Web, and that said server is configured to communicate with computer program stored on said computer.
